# EUROPEAN PATENT SPECIFICATION

(11) **EP 1 462 352 B1**
(45) Date of publication and mention of the grant of the patent: **14.06.2006**
(21) Application number: 04006926.2
(22) Date of filing: 23.03.2004
(51) Int. Cl.: B62K 25/28

(54) **A suspension device for the rear wheel of a motorcycle**
Hinterradfederung eines Motorrads
Suspension arrière de motocyclette

(30) Priority: 24.03.2003 IT BO20030162
(43) Date of publication of application: 29.09.2004
(73) Proprietor: Ducati Motor Holding S.p.A., 40132 Bologna (IT)
(72) Inventor: Terblanche, Pierre, 40135 Bologna (IT)
(74) Representative: Giambrocono, Alfonso

(56) References cited:
- EP-A- 1 247 730
- US-A- 4 556 119
- US-A- 5 062 495

## Description

The present invention relates to a suspension device for the rear wheel of a motorcycle, of the type comprising the characteristics described in the preamble of claim 1.

Suspension devices are known which use dampers with a through-shaft, where the shaft completely passes through the body of the damper, which houses the piston. The two ends of the shaft are positioned on opposite sides of the damper cylinder.

As is known, this type of damper has advantages compared with conventional dampers. Conventional dampers must have a reserve chamber, outside or inside the main body, which collects the fluid displaced by the progressive entry of the shaft in the cylinder, during compression. With through-shaft dampers, the volume occupied by the shaft is always the same. Moreover, conventional dampers have a static extension force due to the pressure of the gas, contained in the reserve chamber and separated from the fluid by a floating separator, needed to compensate the changes in volume in the main chamber and the reserve chamber.

Rear-wheel suspension devices which use dampers of this type are known, for example, from US patent 5 062 495.

The US patent describes a rear wheel suspension device for a motorcycle which has two swing arms attached to a single damper. The damper comprises a cylinder rotatably attached to the swing arms and a shaft slidably mounted in the cylinder and pivoted, at a first end, directly to the main frame of the motorcycle at a point below the cylinder. The damper is of the through-shaft type. The shaft passes through the cylinder and the second end of the shaft exits the opposite side to the point at which it is pivoted to the main frame. A helical spring is wound around the shaft between the cylinder and the second end of the shaft and is held in position by a plate mounted on the second end.

Although in said patent the suspension device has advantages typical of through-shaft dampers, the above-mentioned suspension device is not suitable for mounting on modern motorcycles, whose performance requires special progression curves which cannot be obtained by attaching the damper directly to the frame and to the swing arm.

Suspension devices are known which use conventional dampers mounted on the frame by means of linkages, to obtain a non-linear connection between the vertical movement of the rear wheel and the ground constraining reaction on the wheel. Conventional dampers are normally connected above the main frame of the motorcycle and below the swing arm then again to the main frame by means of the above-mentioned linkages.

The connection above the main frame prevents more suitable and rational use of this zone which could otherwise be used as a position for a portion of the fuel tank, the battery, the airbox or other components.

In this situation the technical need of the present invention is the design of a suspension device for the rear wheel of a motorcycle which can substantially overcome the above-mentioned disadvantages.

The aim of the present invention is, therefore, to provide a suspension device for the rear wheel of a motorcycle which has the advantages typical of through-shaft dampers, with the possibility of obtaining special progression curves, for example non-linear.

Another object of the present invention is to provide a rear-wheel suspension device that is economical, compact and occupies zones of the motorcycle that are not normally used.

The technical need and objects specified are substantially achieved by a suspension device for the rear wheel of a motorcycle characterised in that it comprises one or more of the technical solutions described in the claims herein.

A rear-wheel suspension device for a motorcycle will now be described in further detail with reference to the accompanying drawings, which illustrate a preferred embodiment of the invention, without restricting the scope of the inventive concept, and in which:
- Figure 1 is a side view of a rear-wheel suspension device for a motorcycle according to the present invention;
- Figure 2 is a side view of an alternative embodiment of the rear-wheel suspension device for a motorcycle illustrated in Figure 1;
With reference to the accompanying drawings, the numeral 1 denotes a rear-wheel suspension device for a motorcycle as a whole.

The rear wheel suspension device 1 comprises a swinging fork 2 with a first end 3 attached rotatably, about an axis 4, to the frame or to the engine 5 of a motorcycle. The first end 3 is preferably pivoted at a pin 6 passing through a suitable seat 7 in the engine 5 crankcase, as schematically illustrated, or in similar seats in the motorcycle frame.

A second end 8 of the swinging fork 2 carries an axle 9 for a driving wheel 10 with a gear 11 mechanically connected, by a chain 12, to the engine 5 sprocket 13.

A spring - damper assembly 14 is pivoted at a first intermediate point 15 of the fork 2 between the first end 3 and the second end 8 of the fork 2.

More specifically, the central part of the fork 2 has a first mounting support 16 on which there is a seat 17 with an axis 17a engaged by a connecting pin 18 between the fork 2 and the spring - damper assembly 14. The axis 17a of the seat 17 defines the first intermediate point 15 of the fork 2.

Advantageously, the spring - damper assembly 14 has a through-shaft type damper 19. The damper 19 comprises a cylindrical main body 20 in which there is a chamber, of the known type and therefore not illustrated, which contains damping fluid. A shaft 21 passes through the entire length of the cylinder 20, sliding axially inside it.

The shaft 21 passes axially in the cylindrical body 20 and has a first end 22 and a second end 23 on the opposite side of the cylindrical body 20 to the first end 22. A piston is mounted integral with the shaft 21. The piston, not illustrated, slides in the chamber of the cylindrical body 20.

As illustrated in the accompanying figures, the cylindrical body 20 is preferably pivoted to the fork 2, at the first intermediate point 15, whilst the first end 22 of the shaft 21 is rotatably attached to an articulated linkage 24 which connects a second intermediate point 25 of the fork 2, the spring - damper assembly 14 and the motorcycle engine 5.

The first 15 and second 25 intermediate points of the fork 2 are located on opposite sides of the fork 2. In particular, the second intermediate point 25 is below the first 15, in a respective second mounting support 25a.

In the embodiments illustrated, the first end 22 of the shaft 21 points down, whilst the second end 23 projects above the fork 2.

The spring - damper assembly 14 also has a helical spring 26 around the shaft 21, between the second end 23 of the shaft 21 and the cylindrical body 20. In particular, the second end 23 of the shaft 21 is fitted with a plate 27 which closes the spring 26 between itself and the cylinder 20.

The first intermediate point 15 of the fork 2 and the axle 9 of the wheel 10 are arranged according to an angle α made by the straight line A passing through the axis 4 of the first end 3 of the fork 2 and through the first intermediate point 15 of the fork 2 and by the straight line B passing through the axis 4 of the first end 3 of the fork 2 and through the axle 9 of the wheel 10.

This angle α is one of the important parameters of the suspension device 1, on which its progression depends.

The second intermediate point 25 of the fork 2 and the axle 9 of the wheel 10 are arranged according to an angle β made by the straight line C passing through the axis 4 of the first end 3 of the fork 2 and through the second intermediate point 25 of the fork 2 and by the straight line B passing through the axis 4 of the first end 3 of the fork 2 and through the axle 9 of the wheel 10.

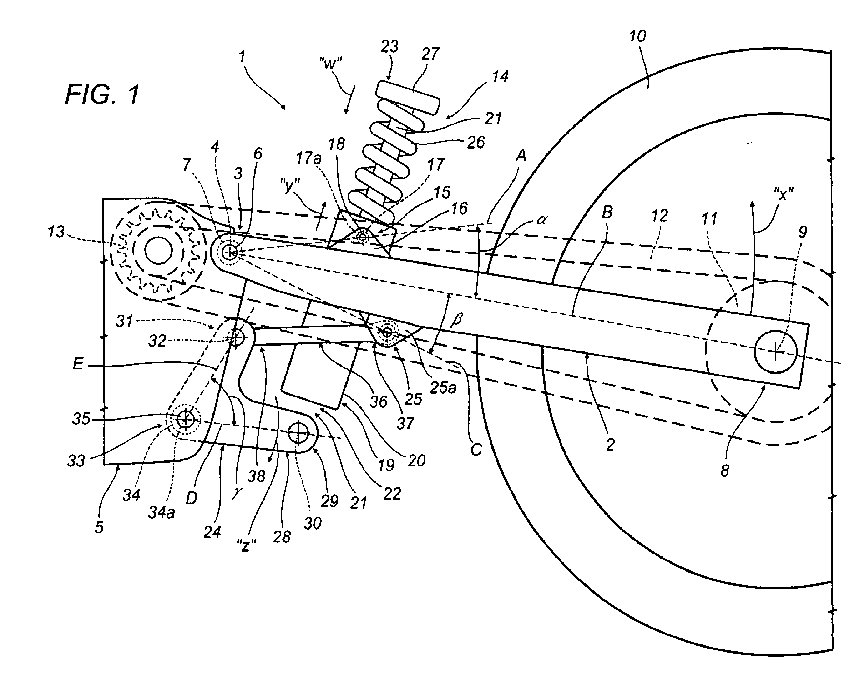

In the preferred embodiment illustrated in Figure 1, the articulated linkage 24 comprises a rocker 28 with three mounting points. The rocker 28 has a first end 29 pivoted at the first end 23 of the spring - damper assembly 14 shaft 21 at a respective axis 30, a second end 31 connected, at a respective axis 32, to the fork 2 and an intermediate point 33 between the ends 29, 31 rotatably attached to the motorcycle frame or engine 5.

The second end 31 of the rocker 28 is positioned, even during movement of the suspension device 1, between the straight line D passing through the axis 30 of the first end 29 and through the intermediate point 33 of the rocker 28 and the fork 2.

With reference to Figure 1, in the engine 5 crankcase there is a seat 34 with an axis 34a engaged with a pin 35 connecting the crankcase and the rocker 28. The axis 34a of the seat 34 defines the intermediate point 33 of the rocker 28.

To connect the fork 2 to the rocker 28, the articulated linkage 24, in the embodiment illustrated in Figure 1, comprises a connecting rod 36 with a first end 37 pivoted at the second intermediate point 25 of the fork 2 and a second end 38 pivoted at the second end 31 of the rocker 28, at the axis 32.

The first and second ends 29, 31 of the rocker 28 are arranged according to an angle γ made by the straight line D passing through the axis 30 of the first end 29 and through the intermediate point 33 of the rocker 28 and by the straight line E passing through the axis 32 of the second end 31 of the rocker 28 and through the intermediate point 33 of the rocker 28. The values of the angle γ are preferably between 70° and 100°.

Moreover, the values of the angle α, relative to the first embodiment, are preferably between 0° and 30°, whilst the values of the angle β, according to which the second intermediate point 25 of the fork 2 and the axle 9 of the wheel 10 are arranged are between 0° and 30°.

With reference to Figure 1, the preferred embodiment of the suspension device according to the invention functions as described below.

After the wheel 10 is displaced relative to the motorcycle frame or engine 5, due to the inertia forces acting on the motorcycle, when the centre of gravity moves due, for example, to the rider's movement and the ground constraining reactions, the fork 2 swings about its pin 6. An upward movement by the wheel 10 relative to the engine 5, as indicated by the arrow "x" causes an anti-clockwise rotation, in the plane in Figure 1, of the fork 2 about its axis 4. During said rotation, the fork 2 pulls its first intermediate point 15 and the damper 19 cylinder 20 attached to it upwards (arrow "y").

At the same time, the movement of the second intermediate point 25, integral with the first intermediate point 15, pulls the connecting rod 36 which, pivoting at the second end 31 of the rocker 28, causes it to rotate clockwise as indicated by arrow "z" about the intermediate point 33 rotatably attached to the motorcycle frame or engine 5. The first end 29 of the rocker 28 moves downwards, pulling the first end 22 and the second end 23 of the shaft 21 with it, as indicated by arrow "w".

Therefore, the upward movement of the cylindrical body 20 is simultaneous with the downward sliding of the shaft 21, consequently compressing the helical spring 26, located between the plate 27 of the second end 23 of the shaft 21 and the cylindrical body 20.

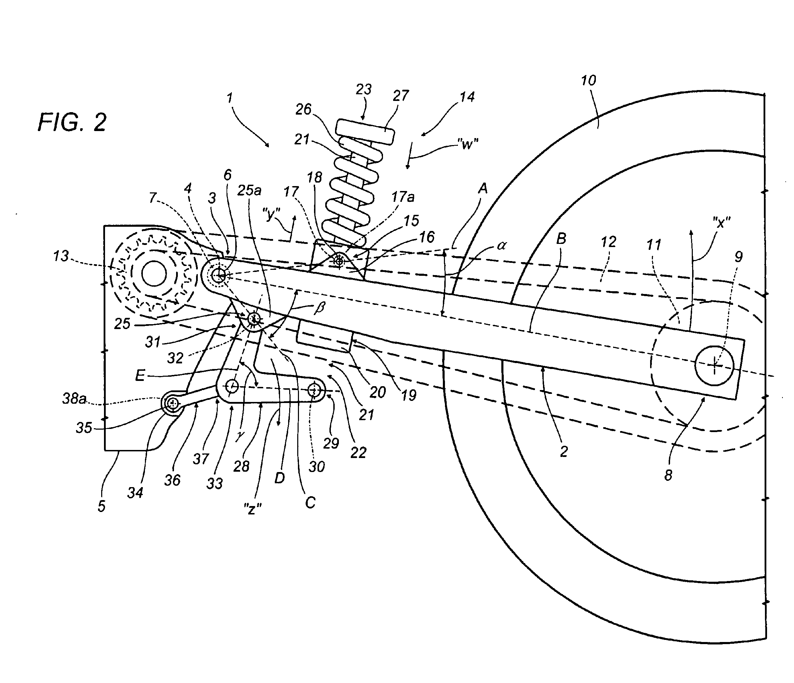

Figure 2 illustrates an alternative embodiment of the suspension device disclosed, in which the rocker 28 and the connecting rod 36 are arranged in a different configuration.

Again, the first end 29 of the rocker 28 pivots at the first end 22 of the shaft 21 at the axis 30.

In contrast to the above-mentioned embodiment, the second end 31 of the rocker 28 is pivoted directly at the second intermediate point 25 of the fork 2 and the intermediate point 33 is connected to the engine 5 by the connecting rod 36.

As in the preferred embodiment described above, the second end 31 of the rocker 28 is between the straight line D passing through the axis 30 of the first end 29 and through the intermediate point 33 of the rocker 28 and the fork 2.

The first end 37 of the connecting rod 36 is pivoted at the intermediate point 33 of the rocker 28, whilst the second end 38 is pivoted to the motorcycle frame or engine 5 at an axis 38a. In particular, with reference to Figure 2, the pin 35 engaged in the seat 34 in the engine 5 crankcase connects the crankcase to the connecting rod 36.

The values of the angle γ made by the straight line D passing through the axis 30 of the first end 29 and through the intermediate point 33 of the rocker 28 and by the straight line E passing through the axis 32 of the second end 31 of the rocker 28 and through the intermediate point 33 of the rocker 28 are preferably between 70° and 100°.

In the alternative embodiment illustrated in Figure 2, the values of the angle α are preferably between 15° and 45°, whilst the values of the angle β, according to which the second intermediate point 25 of the fork 2 and the axle 9 of the wheel 10 are arranged are between 25° and 55°.

With reference to Figure 2, the suspension device in accordance with the alternative embodiment functions as described below.

As for the embodiment previously described and illustrated in Figure 1, the upward movement of the wheel 10 relative to the engine 5 (arrow "x") causes the fork 2 to rotate anti-clockwise about its axis 4. During this rotation, the fork 2 pulls its first intermediate point 15 and the damper 19 cylinder 20 attached to it upwards (arrow "y").

As illustrated in Figure 2, the movement of the second intermediate point 25, integral with the first intermediate point 15, pulls the rocker 28 upwards.

Due to the connection established by the connecting rod 36, the rocker 28 is forced to move with a clockwise rototranslational motion (arrow "z").

The first end 29 of the rocker 28 moves downwards, pulling the first end 22 and the second end 23 of the shaft 21 with it, as indicated by arrow "w". Again, for this embodiment, the upward movement of the cylindrical body 20 is simultaneous with the downward sliding of the shaft 21, consequently compressing the helical spring 26.

The shape of the curve correlating the wheel movement and shaft sliding in the cylindrical body of the damper is determined by the above-mentioned characteristic angles α, β, γ and by the ratio of the distances between the connecting points described.

The invention achieves important advantages.

Firstly, the suspension device disclosed has the advantages typical of through-shaft dampers together with the possibility of obtaining special progression curves, changing the dimensions of the articulated linkage.

In particular, considering that through-shaft dampers do not require a large auxiliary tank for the damping fluid, but at the most have a small tank containing the pressurised gas required to prevent the negative effects of cavitation, the spring - damper assembly is very compact and less expensive and, as a result, the suspension device is smaller, lighter and more economical.

At the same time, the possibility of building suspension devices according to the structure of the present invention but with different measurements allows them to be used on motorcycles with different geometries, weight distributions and power curves, for the most diverse applications.

Moreover, since the damper is mounted on the fork and is not attached to the motorcycle frame above, the space under the seat, not normally used, can be used to position other components.

Finally, since during the fork swinging movement the cylindrical body and the damper shaft, as structured in the present invention, move in opposite directions, and with them some articulated linkage components, the centre of gravity of the damper only moves a little, reducing the inertia with which the suspension device follows irregularities and roughness in the road surface.

## Claims

1. A suspension device for the rear wheel of a motorcycle comprising: a swinging fork (2) with a first end (3) pivoted, about an axis (4), to the frame or engine (5) of a motorcycle and a second end (8) mounting an axle (9) of a wheel (10); a spring - damper assembly (14) pivoted at a first intermediate point (15) of the fork (2) between the first end (3) and the second end (8) of the fork (2); the spring - damper assembly (14) having a damper (19) comprising a cylindrical body (20) and a shaft (21) passing axially through the cylindrical body (20); the through-shaft (21) sliding axially in the cylindrical body (20) and having a first end (22) and a second end (23) on the opposite side of the cylindrical body (20) to the first end (22); the suspension device for the rear wheel of a motorcycle being **characterised in that** it also comprises an articulated linkage (24) connecting a second intermediate point (25) of the fork (2), the spring - damper assembly (14) and the motorcycle frame or engine (5).

2. The suspension device according to claim 1, **characterised in that** the cylindrical body (20) is pivoted to the fork (2) at the first intermediate point (15) of the fork (2) and **in that** the first end (22) of the through-shaft (21) is rotatably attached to the articulated linkage (24).

3. The suspension device according to claim 2, **characterised in that** the spring - damper assembly (14) has a spring (26) positioned around the shaft (21) between the second end (23) of the shaft (21) and the cylindrical body (20).

4. The suspension device according to claim 2 or 3, **characterised in that** the articulated linkage (24) comprises a rocker (28) with a first end (29) pivoted at the first end (22) of the shaft (21) of the spring - damper assembly (14) at an axis (30), a second end (31) connected to the fork (2), at an axis (32), and an intermediate point (33) between the ends (29, 31) rotatably attached to the motorcycle frame or engine (5).

5. The suspension device according to claim 4, **characterised in that** the second end (31) of the rocker (28) is positioned between the straight line (D) passing through the axis (30) of the first end (29) and through the intermediate point (33) of the rocker (28) and the fork (2).

6. The suspension device according to claim 4, **characterised in that** the first and second ends (29, 31) of the rocker (28) are arranged according to an angle (γ) made by the straight line (D) passing through the axis (30) of the first end (29) and through the intermediate point (33) of the rocker (28) and by the straight line (E) passing through the axis (32) of the second end (31) of the rocker (28) and through the intermediate point (33) of the rocker (28).

7. The suspension device according to claim 6, **characterised in that** the values of the angle (γ) according to which the first and second ends (29, 31) of the rocker (28) are arranged are between 70° and 100°.

8. The suspension device according to claim 4, **characterised in that** the articulated linkage (24) also comprises a connecting rod (36) having a first end (37) pivoted at the second intermediate point (25) of the fork (2) and a second end (38) pivoted at the second end (31) of the rocker (28) at an axis (32), connecting the fork (2) to the rocker (28).

9. The suspension device according to claim 2 or 3, **characterised in that** the articulated linkage (24) comprises a rocker (28) with a first end (29) pivoted at the first end (22) of the shaft (21) of the spring - damper assembly (14) at an axis (30), a second end (31) pivoted at the second intermediate point (25) of the fork (2) and an intermediate point (33) between the ends (29, 31) connected to the motorcycle frame or engine (5).

10. The suspension device according to claim 9, **characterised in that** the second end (31) of the rocker (28) is positioned between the straight line (D) passing through the axis (30) of the first end (29) and through the intermediate point (33) of the rocker (28) and the fork (2).

11. The suspension device according to claim 9, **characterised in that** the first and second ends (29, 31) of the rocker (28) are arranged according to an angle (γ) made by the straight line (D) passing through the axis (30) of the first end (29) and through the intermediate point (33) of the rocker (28) and by the straight line (E) passing through the axis (32) of the second end (31) of the rocker (28) and through the intermediate point (33) of the rocker (28).

12. The suspension device according to claim 11, **characterised in that** the values of the angle (γ) according to which the first and second ends (29, 31) of the rocker (28) are arranged are between 70° and 100°.

13. The suspension device according to claim 9, **characterised in that** the articulated linkage (24) also comprises a connecting rod (36) having a first end (37) pivoted at the intermediate point (33) of the rocker (28) and a second end (38) pivoted to the motorcycle frame or engine (5) at the axis (38a), connecting the rocker (28) to the motorcycle frame or engine (5).

14. The suspension device according to claim 1, 4 or 9, **characterised in that** the first intermediate point (15) of the fork (2) and the axle (9) of the wheel (10) are arranged according to an angle (α) made by the straight line (A) passing through the axis (4) of the first end (3) of the fork (2) and through the first intermediate point (15) of the fork (2) and by the straight line (B) passing through the axis (4) of the first end (3) of the fork (2) and through the axle (9) of the wheel (10).

15. The suspension device according to claim 14, **characterised in that** the values of the angle (α) according to which the first intermediate point (15) of the fork (2) and the axle (9) of the wheel (10) are arranged are between 0° and 30°.

16. The suspension device according to claim 14, **characterised in that** the values of the angle (α) according to which the first intermediate point (15) of the fork (2) and the axle (9) of the wheel (10) are arranged are between 15° and 45°.

17. The suspension device according to claim 1, 4 or 9, **characterised in that** the second intermediate point (25) of the fork (2) and the axle (9) of the wheel (10) are arranged according to an angle (β) made by the straight line (C) passing through the axis (4) of the first end (3) of the fork (2) and through the second intermediate point (25) of the fork (2) and by the straight line (B) passing through the axis (4) of the first end (3) of the fork (2) and through the axle (9) of the wheel (10).

18. The suspension device according to claim 16, **characterised in that** the values of the angle (β) according to which the second intermediate point (25) of the fork (2) and the axle (9) of the wheel (10) are arranged are between 0° and 30°.

19. The suspension device according to claim 16, **characterised in that** the values of the angle (β) according to which the second intermediate point (25) of the fork (2) and the axle (9) of the wheel (10) are arranged are between 25° and 55°.

## Patentansprüche

1. Hinterradaufhängung für ein Motorrad, aufweisend: Eine Schwinggabel (2) mit einem ersten Ende (3), das um eine Achse (4) schwenkbar am Rahmen oder Motor (5) eines Motorrads angelenkt ist, und mit einem zweiten Ende (8), das eine Achse (9) eines Rads (10) trägt; einen Federdämpferaufbau (14), der an einem ersten Zwischenpunkt (15) der Gabel (2) zwischen dem ersten Ende (3) und dem zweiten Ende (8) der Gabel (2) schwenkbar angelenkt ist; wobei der Federdämpferaufbau (14) einen Dämpfer (19) aufweist, der einen zylindrischen Körper (20) und eine Welle (21) umfasst, die den zylindrischen Körper (20) axial durchsetzt; wobei die Durchgangswelle (21) in dem zylindrischen Körper (20) axial gleitverschiebbar ist und ein erstes Ende (22) sowie ein zweites Ende (23) auf der zum ersten Ende (22) gegenüberliegenden Seite des zylindrischen Körpers (20) aufweist; wobei die Hinterradaufhängung für ein Motorrad **dadurch gekennzeichnet ist, dass** sie außerdem eine Gelenkverbindung (24) umfasst, die einen zweiten Zwischenpunkt (25) der Gabel (2), den Federdämpferaufbau (14) und den Motorradrahmen bzw. den Motor (5) verbindet.

2. Aufhängung nach Anspruch 1, **dadurch gekennzeichnet, dass** der zylindrische Körper (20) an der Gabel (2) am ersten Zwischenpunkt (15) der Gabel (2) schwenkbar angelenkt ist, und dass das erste Ende (22) der Durchgangswelle (21) an der Gelenkverbindung (24) drehbar angebracht ist.

3. Aufhängung nach Anspruch 2, **dadurch gekennzeichnet, dass** der Federdämpferaufbau (14) eine Feder (26) aufweist, die um die Welle (21) zwischen dem zweiten Ende (23) der Welle (21) und dem zylindrischen Körper (20) angeordnet ist.

4. Aufhängung nach Anspruch 2 oder 3, **dadurch gekennzeichnet, dass** die Gelenkverbindung (24) eine Wippe (28) mit einem ersten Ende (29) umfasst, das an dem ersten Ende (22) der Welle (21) des Federdämpferaufbaus (14) an einer Achse (30) schwenkbar angebracht ist, und die mit einem zweiten Ende (31) mit der Gabel (2) an einer Achse (32) verbunden ist, wobei ein Zwischenpunkt (33) zwischen den Enden (29, 31) an dem Motorradrahmen oder Motor (5) drehbar angebracht ist.

5. Aufhängung nach Anspruch 4, **dadurch gekennzeichnet, dass** das zweite Ende (31) der Wippe (28) zwischen einer die Achse (30) des ersten Endes (29) und den Zwischenpunkt (33) der Wippe (28) und die Gabel (2) durchsetzenden geraden Linie (D) angeordnet ist.

6. Aufhängung nach Anspruch 4, **dadurch gekennzeichnet, dass** die ersten und zweiten Enden (29, 31) der Wippe (28) in Übereinstimmung mit einem Winkel (γ) angeordnet sind, der durch die gerade Linie (D), die die Achse (30) des ersten Endes (29) und den Zwischenpunkt (33) der Wippe (28) durchsetzt und durch die gerade Linie (E) festgelegt ist, die die Achse (32) des zweiten Endes (31) der Wippe (28) und den Zwischenpunkt (33) der Wippe (28) durchsetzt.

7. Aufhängung nach Anspruch 6, **dadurch gekennzeichnet, dass** die Werte des Winkels (γ), in Übereinstimmung mit welchem die ersten und zweiten Enden (29, 31) der Wippe (28) angeordnet sind, zwischen 70° und 100° betragen.

8. Aufhängung nach Anspruch 4, **dadurch gekennzeichnet, dass** die Gelenkverbindung (24) außerdem eine Verbindungsstange (36) umfasst, die ein erstes Ende (37) aufweist, das an dem zweiten Zwischenpunkt (25) der Gabel (2) schwenkbar angelenkt ist, und ein zweites Ende (38), das an dem zweiten Ende (31) der Wippe (28) an einer Achse (32) schwenkbar angelenkt ist, die die Gabel (2) mit der Wippe (28) verbindet.

9. Aufhängung nach Anspruch 2 oder 3, **dadurch gekennzeichnet, dass** die Gelenkverbindung (24) eine Wippe (28) mit einem ersten Ende (29) umfasst, das an dem ersten Ende (22) der Welle (21) des Federdämpferaufbaus (14) an einer Achse (30) schwenkbar angelenkt ist, und mit einem zweiten Ende (31), das an dem zweiten Zwischenpunkt (25) der Gabel (2) und einem Zwischenpunkt (33) zwischen den Enden (29, 31) schwenkbar angelenkt ist, der mit dem Motorradrahmen oder dem Motor (5) verbunden ist.

10. Aufhängung nach Anspruch 9, **dadurch gekennzeichnet, dass** das zweite Ende (31) der Wippe (28) zwischen der geraden Linie (D), die die Achse (30) des ersten Endes (29) und den Zwischenpunkt (33) der Wippe (28) und der Gabel (2) durchsetzt, angeordnet ist.

11. Aufhängung nach Anspruch 9, **dadurch gekennzeichnet, dass** die ersten und zweiten Enden (29, 31) der Wippe (28) in Übereinstimmung mit einem Winkel (γ) angeordnet sind, der durch die gerade Linie (D), die die Achse (30) des ersten Endes (29) und den Zwischenpunkt (33) der Wippe (28) durchsetzt, und durch die gerade Linie (E) festgelegt ist, die die Achse (32) des zweiten Endes (31) der Wippe (28) und den Zwischenpunkt (33) der Wippe (28) durchsetzt.

12. Aufhängung nach Anspruch 11, **dadurch gekennzeichnet, dass** die Werte des Winkels (γ), in Übereinstimmung mit welchem die ersten und zweiten Enden (29, 31) der Wippe (28) angeordnet sind, zwischen 70° und 100° betragen.

13. Aufhängung nach Anspruch 9, **dadurch gekennzeichnet, dass** die Gelenkverbindung (24) außerdem eine Verbindungsstange (36) umfasst, die ein erstes Ende (37) aufweist, das an dem Zwischenpunkt (33) der Wippe (28) schwenkbar angelenkt ist, und ein zweites Ende (38), das an dem Motorradrahmen oder dem Motor (5) an der Achse (38a) schwenkbar angelenkt ist, die die Wippe (28) mit dem Motorradrahmen oder dem Motor (5) verbindet.

14. Aufhängung nach Anspruch 1, 4 oder 9, **dadurch gekennzeichnet, dass** der erste Zwischenpunkt (15) der Gabel (2) und die Achse (9) des Rads (10) in Übereinstimmung mit einem Winkel (α) angeordnet sind, der durch die gerade Linie (A), die die Achse (4) des ersten Endes (3) der Gabel (2) und den ersten Zwischenpunkt (15) der Gabel (2) durchsetzt, und durch die gerade Linie (B) festgelegt ist, die die Achse (4) des ersten Endes (3) der Gabel (2) und die Achse (9) des Rads (10) durchsetzt.

15. Aufhängungsvorrichtung nach Anspruch 14, **dadurch gekennzeichnet, dass** die Werte des Winkels (α), in Übereinstimmung mit welchem der erste Zwischenpunkt (15) der Gabel (2) und die Achse (9) des Rads (10) angeordnet sind, zwischen 0° und 30° betragen.

16. Aufhängung nach Anspruch 14, **dadurch gekennzeichnet, dass** die Werte des Winkels (α), in Übereinstimmung mit welchem der erste Zwischenpunkt (15) der Gabel (2) und die Achse (9) des Rads (10) angeordnet sind, zwischen 15° und 45° betragen.

17. Aufhängung nach Anspruch 1, 4 oder 9, **dadurch gekennzeichnet, dass** der zweite Zwischenpunkt (25) der Gabel (2) und die Achse (9) des Rads (10) in Übereinstimmung mit einem Winkel (β) angeordnet sind, der durch die gerade Linie (C), die die Achse (4) des ersten Endes (3) der Gabel (2) und den zweiten Zwischenpunkt (25) der Gabel (2) durchsetzt, und durch die gerade Linie (B) festgelegt ist, die die Achse (4) des ersten Endes (3) der Gabel (2) und die Achse (9) des Rads (10) durchsetzt.

18. Aufhängung nach Anspruch 16, **dadurch gekennzeichnet, dass** die Werte des Winkels (β), in Übereinstimmung mit welchem der zweite Zwischenpunkt (25) der Gabel (2) und die Achse (9) des Rads (10) angeordnet sind, zwischen 0° und 30° betragen.

19. Aufhängung nach Anspruch 16, **dadurch gekennzeichnet, dass** die Werte des Winkels (β), in Übereinstimmung mit welchem der zweite Zwischenpunkt (25) der Gabel (2) und die Achse (9) des Rads (10) angeordnet sind, zwischen 25° und 55° betragen.

## Revendications

1. Dispositif de suspension destiné à une roue arrière d'une motocyclette comprenant : une fourche oscillante (2) avec une première extrémité (3) pivotée, autour d'un axe (4), par rapport au châssis ou au moteur (5) d'une motocyclette et une seconde extrémité (8) permettant de monter un essieu (9) d'une roue (10) ; un ensemble ressort - amortisseur (14) pivoté au niveau d'un premier point intermédiaire (15) de la fourche (2) entre la première extrémité (3) et la seconde extrémité (8) de la fourche (2) ; l'ensemble ressort - amortisseur (14) étant doté d'un amortisseur (19) comprenant un corps cylindrique (20) et un arbre (21) passant de manière axiale par le corps cylindrique (20) ; l'arbre passant (21) coulissant de manière axiale dans le corps cylindrique (20) et ayant une première extrémité (22) et une seconde extrémité (23) sur le côté opposé du corps cylindrique (20) par rapport à la première extrémité (22) ; le dispositif de suspension pour la roue arrière d'une motocyclette étant **caractérisé en ce qu'**il comprend également une tringlerie articulée (24) raccordant un second point intermédiaire (25) de la fourche (2), l'ensemble ressort - amortisseur (14) et le châssis ou moteur (5) de la motocyclette.

2. Dispositif de suspension selon la revendication 1, **caractérisé en ce que** le corps cylindrique (20) est pivoté par rapport à la fourche (2) au niveau du premier point intermédiaire (15) de la fourche (2) et **en ce que** la première extrémité (22) de l'arbre passant (21) est fixée de manière rotative sur la tringlerie articulée (24).

3. Dispositif de suspension selon la revendication 2, **caractérisé en ce que** l'ensemble ressort - amortisseur (14) possède un ressort (26) positionné autour de l'arbre (21) entre la seconde extrémité (23) de l'arbre (21) et le corps cylindrique (20).

4. Dispositif de suspension selon la revendication 2 ou 3, **caractérisé en ce que** la tringlerie articulée (24) comprend un balancier (28) avec une première extrémité (29) pivotée au niveau de la première extrémité (22) de l'arbre (21) de l'ensemble ressort - amortisseur (14) sur un axe (30), une seconde extrémité (31) raccordée à la fourche (2), sur un axe (32), et un point intermédiaire (33) entre les extrémités (29, 31) fixé de manière rotative sur le châssis ou le moteur (5) de la motocyclette.

5. Dispositif de suspension selon la revendication 4, **caractérisé en ce que** la seconde extrémité (31) du balancier (28) est positionnée entre la ligne droite (D) passant par l'axe (30) de la première extrémité (29) et par le point intermédiaire (33) du balancier (28) et la fourche (2).

6. Dispositif de suspension selon la revendication 4, **caractérisé en ce que** les première et seconde extrémités (29, 31) du balancier (28) sont agencées selon un angle (γ) réalisé par la ligne droite (D) passant par l'axe (30) de la première extrémité (29) et par le point intermédiaire (33) du balancier (28) et par la ligne droite (E) passant par l'axe (32) de la seconde extrémité (31) du balancier (28) et par le point intermédiaire (33) du balancier (28).

7. Dispositif de suspension selon la revendication 6, **caractérisé en ce que** les valeurs de l'angle (γ) selon lesquelles les première et seconde extrémités (29, 31) du balancier (28) sont agencées, sont comprises entre 70° et 100°.

8. Dispositif de suspension selon la revendication 4, **caractérisé en ce que** la tringlerie articulée (24) comprend également une tige de raccordement (36) ayant une première extrémité (37) pivotée au niveau du second point intermédiaire (25) de la fourche (2) et une seconde extrémité (38) pivotée au niveau de la seconde extrémité (31) du balancier (28) sur un axe (32), raccordant la fourche (2) au balancier (28).

9. Dispositif de suspension selon la revendication 2 ou 3, **caractérisé en ce que** la tringlerie articulée (24) comprend un balancier (28) avec une première extrémité (29) pivotée au niveau de la première extrémité (22) de l'arbre (21) de l'ensemble ressort - amortisseur (14) sur un axe (30), une seconde extrémité (31) pivotée au niveau du second point intermédiaire (25) de la fourche (2) et un point intermédiaire (33) entre les extrémités (29, 31) raccordées au châssis ou au moteur (5) de la motocyclette.

10. Dispositif de suspension selon la revendication 9, **caractérisé en ce que** la seconde extrémité (31) du balancier (28) est positionnée entre la ligne droite (D) passant par l'axe (30) de la première extrémité (29) et par le point intermédiaire (33) du balancier (28) et la fourche (2).

11. Dispositif de suspension selon la revendication 9, **caractérisé en ce que** les première et seconde extrémités (29, 31) du balancier (28) sont agencées selon un angle (γ) réalisé par la ligne droite (D) passant par l'axe (30) de la première extrémité (29) et par le point intermédiaire (33) du balancier (28) et par la ligne droite (E) passant par l'axe (32) de la seconde extrémité (31) du balancier (28) et par le point intermédiaire (33) du balancier (28).

12. Dispositif de suspension selon la revendication 11, **caractérisé en ce que** les valeurs de l'angle (γ) selon lesquelles les première et seconde extrémités (29, 31) du balancier (28) sont agencées, sont comprises entre 70° et 100°.

13. Dispositif de suspension selon la revendication 9, **caractérisé en ce que** la tringlerie articulée (24) comprend également une tige de raccordement (36) ayant une première extrémité (37) pivotée au niveau du point intermédiaire (33) du balancier (28) et une seconde extrémité (38) pivotée sur le châssis ou le moteur (5) de la motocyclette au niveau de l'axe (38a), raccordant le balancier (28) au châssis ou moteur (5) de la motocyclette.

14. Dispositif de suspension selon la revendication 1, 4 ou 9, **caractérisé en ce que** le premier point intermédiaire (15) de la fourche (2) et l'essieu (9) de la roue (10) sont agencés selon un angle (α) réalisé par la ligne droite (A) passant par l'axe (4) de la première extrémité (3) de la fourche (2) et par le premier point intermédiaire (15) de la fourche (2) et par la ligne droite (B) passant par l'axe (4) de la première extrémité (3) de la fourche (2) et par l'essieu (9) de la roue (10).

15. Dispositif de suspension selon la revendication 14, **caractérisé en ce que** les valeurs de l'angle (α) selon lesquelles le premier point intermédiaire (15) de la fourche (2) et l'essieu (9) de la roue (10) sont agencés, sont comprises entre 0° et 30°.

16. Dispositif de suspension selon la revendication 14, **caractérisé en ce que** les valeurs de l'angle (α) selon lesquelles le premier point intermédiaire (15) de la fourche (2) et l'essieu (9) de la roue (10) sont agencés, sont comprises entre 15° et 45°.

17. Dispositif de suspension selon la revendication 1, 4 ou 9, **caractérisé en ce que** le second point intermédiaire (25) de la fourche (2) et l'essieu (9) de la roue (10) sont agencés selon un angle (β) réalisé par la ligne droite (C) passant par l'axe (4) de la première extrémité (3) de la fourche (2) et par le second point intermédiaire (25) de la fourche (2) et par la ligne droite (B) passant par l'axe (4) de la première extrémité (3) de la fourche (2) et par l'essieu (9) de la roue (10).

18. Dispositif de suspension selon la revendication 16, **caractérisé en ce que** les valeurs de l'angle (β) selon lesquelles le second point intermédiaire (25) de la fourche (2) et l'essieu (9) de la roue (10) sont agencés, sont comprises entre 0° et 30°.

19. Dispositif de suspension selon la revendication 16, **caractérisé en ce que** les valeurs de l'angle (β) selon lesquelles le second point intermédiaire (25) de la fourche (2) et l'essieu (9) de la roue (10) sont agencés, sont comprises entre 25° et 55°.
